# EUROPÄISCHE PATENTSCHRIFT

(11) **EP 2 744 095 B1**
(45) Veröffentlichungstag und Bekanntmachung des Hinweises auf die Patenterteilung: **01.11.2017**
(21) Anmeldenummer: 12401248.5
(22) Anmeldetag: 12.12.2012
(51) Int. Cl.: H02P 5/74, H02M 7/06, H02P 6/04

(54) **Mechatronisches System für elektrisches Gerät**
Mechatronic system for an electrical device
Système mécatronique pour appareil électrique

(43) Veröffentlichungstag der Anmeldung: 18.06.2014
(73) Patentinhaber: Miele & Cie. KG, 33332 Gütersloh (DE)
(72) Erfinder: Femmer, Uwe, 33330 Gütersloh (DE); Rode, Peter, 53881 Euskirchen (DE); Sammoud, Hafedh, 8090 Kelibia (TN); Schaefer-van den Boom, Klaus, 53489 Sinzig (DE)

(56) Entgegenhaltungen:
- EP-B1- 1 691 476
- DE-A1-102007 030 072
- JP-A- S5 771 272
- JP-A- 2008 183 087
- JP-A- 2009 153 247
- US-A1- 2006 279 248
- GUI-JIA SU ET AL: "An integrated traction and compressor drive system for EV/HEV applications", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, vol. 2, 6 March 2005 (2005-03-06), pages 719-725Vol.2, XP010809315, DOI: 10.1109/APEC.2005.1453049 ISBN: 978-0-7803-8975-5
- HOLMES D G ET AL: "VARIABLE SPEED CONTROL OF SINGLE AND TWO PHASE INDUCTION MOTORS USING A THREE PHASE VOLTAGE SOURCE INVERTER", CONFERENCE RECORD OF THE INDUSTRY APPLICATIONS CONFERENCE IAS ANNUAL MEETING. TORONTO, OCT. 3 - 6, 1993; [CONFERENCE RECORD OF THE INDUSTRY APPLICATIONS CONFERENCE IAS ANNUAL MEETING], NEW YORK, IEEE, US, vol. PART 01, 3 October 1993 (1993-10-03), pages 613-620, XP000427482,

## Beschreibung

Die Erfindung betrifft ein mechatronisches System mit einem Frequenzumrichter zum Betreiben eines elektrischen Motors.

Bei motorischen Antrieben in Haushaltgeräten oder gewerblich eingesetzten Waschmaschinen, Trocknern oder Spülmaschinen werden zunehmend Frequenzumrichter verwendet, um die Leistung der Motoren optimal zu steuern. Ferner können die von den Geräten durchzuführenden Prozesse durch die Verwendung von Frequenzumrichtern zur Bestromung bzw. Steuerung der Motoren immer filigraner und optimaler gestaltet werden. Als Antriebe haben sich neben Asynchronmaschinen mit Kurzschlussläufer zunehmend Synchronmotoren mit Permanentmagnet-bestückten Rotoren verbreitet, die bei kompaktem und einfachem Aufbau eine hohe Leistung bereitstellen. Diese Motoren können als ein-, zwei-, oder dreiphasige Motoren konzipiert werden, je nach Anforderungen. Bei Pumpen haben sich ein-, oder zwei- oder dreiphasige Motoren als vorteilhaft erwiesen, da sie bei einfachem Aufbau ein hinreichendes Leistungsspektrum für den Verwendungszweck bieten. Für jede Phase eines dreiphasigen Motors ist dabei jeweils eine Halbbrücke mit jeweils zwei Leistungsschaltern notwendig; für jede Phase eines ein- oder zweiphasigen Motors ist für jede Phase eine sogenannte H-Brücke mit jeweils vier Leistungsschaltern vorgesehen.

Für den Betrieb mehrerer 3-Phasen-Motoren sind üblicherweise sechs Leistungsschalter im Wechselrichter für jeweils einen Motor notwendig. Aus der DE 10 2007 030 072 A1 ist es bekannt, mit einem einzigen Wechselrichter zwei Motoren zu aktivieren. Die Umschaltung erfolgt hierbei per Relais, das Ausgangsleitungen des Wechselrichters zwischen einzelnen Motoren hin und her schalten kann. Hierbei können beide Motoren nicht gleichzeitig betrieben werden, da das Umschaltrelais einen Motor jeweils vom Wechselrichterausgang trennt. In einer anderen Ausführung ist in der DE 10 2007 030 072 A1 eine kompakte Steueranordnung mit einem Umrichter zum Bestromen eines 3-phasigen Drehstrommotors und zum Ein- oder Ausschalten von weiteren Gleichstrommotoren offenbart.

Aus der EP 1 691 476 B1 ist es bekannt, einen Wechselrichter mit dreiphasigem Ausgang zur Ansteuerung eines 2-Phasen-PM-Motors zu verwenden. Die Schalterpaare werden alle per PWM geschaltet; mindestens ein Schalterpaar diskontinuierlich, das für die Steigerung der Ausgangsspannung bzw. der einzelnen Phasenspannungen und zur Reduzierung von Umschaltverlusten vorgesehen ist.

Aus der JP 2008 183 087 ist bekannt, drei Motoren mit je einem zugeordneten Umrichter zu betreiben.

Aus der Veröffentlichung "An Integrated Traction and Compressor Drive System for EV/HEV Applications"; Gui-Jia Su and John S. Hsu; APEC Twentieth Annual IEEE Applied Power Electronics Conference and Exposition; 2005 ist ein mechatronisches System bekannt, das über einen 3-phasigen Motor und einen 2-phasigen Motor mit zugehörigen Wechselrichtern verfügt.

Der Erfindung liegt somit die Aufgabe zu Grunde, ein einfach aufgebautes und zu konfigurierendes mechatronisches System mit einem Frequenzumrichter und einer Mehrzahl von zu steuernden Motoren bereitzustellen.

Erfindungsgemäß wird die Aufgabe durch ein mechatronisches System gemäß Anspruch 1 und ein elektrisches Gerät gemäß Anspruch 6 gelöst. Vorteilhafte Ausgestaltungen und Weiterbildungen der Erfindung ergeben sich aus den jeweils nachfolgenden abhängigen Ansprüchen.

Die mit der Erfindung erreichbaren Vorteile bestehen darin, dass im Vergleich zu herkömmlichen Wechselrichtern mit Modulation aller drei Halbbrücken für die Phasen des Motors nur zwei Halbbrücken gesteuert werden müssen, da der Sternpunktanschluss, den die miteinander verbundenen Wicklungsenden definieren, mit einem fest vordefinierten Potential versehen ist. Somit kann die maximal für einen Wicklungsstrang vorbestimmte Spannung an einem Wicklungsstrang des Motors angelegt werden, ohne dass zusätzliche und aufwändige Maßnahmen zur Spannungsbegrenzung oder Reduzierung nötig sind. Insbesondere ist diese Schaltungstopologie vorteilhaft anzuwenden bei Motoren mit sogenannter kleiner und mittlerer Leistung, beispielsweise für Gebläse oder Pumpen, bei denen die Ausnutzung der maximal möglichen Wechselrichter-Ausgangsspannung nicht erforderlich ist. Hierzu ist die Wandlereinrichtung des Umrichters dazu eingerichtet, zusätzlich zur ersten Gleichspannung im Zwischenkreis eine weitere Gleichspannung für den Zwischenkreis bereitzustellen, die einen Wert im Bereich zwischen der Zwischenkreisgleichspannung und dem Bezugspotential hat, wobei zumindest eine Wicklung mit einem Ende an der weiteren Gleichspannung angeschlossen ist. Die Bereitstellung der weiteren, vorzugsweise konstanten Gleichspannung dient zum Anschluss des Sternpunktes, der zwei Enden der Motorwicklung verbindet. Dadurch wird jede Motorwicklung jeweils nur mit einem Bruchteil der Spannung betrieben, die sich aus dem Potential der ersten Spannung gegenüber dem Bezugspotential ergibt.

Der Wechselrichter des Umrichters umfasst zwei Halbbrücken zum Ansteuern eines 2-phasigen Motors, wobei die weitere Gleichspannung mit einem durch zwei miteinander verbundene Enden der Motorwicklungen gebildeten Sternpunkt verbunden werden kann. Ein zweiphasiger Motor, beispielsweise ein Synchronmotor mit Permanentmagnet-bestücktem Rotor, lässt sich besonders einfach und zuverlässig durch einen derartigen Frequenzumrichter bestromen, wobei die einzelnen Phasen auf die Teilspannungen ausgelegt sein müssen, die sich aus der Differenz von der ersten Gleichspannung abzüglich der weiteren Gleichspannung ergeben.

Der Frequenzumrichter umfasst zumindest einen weiteren Wechselrichter im Gleichspannungszwischenkreis zum Betreiben eines weiteren Motors. Somit stellt die bereits besagte Wandlereinrichtung die Gleichspannung für mehrere Wechselrichter für mehrere Motoren bereit, was zu einer Einsparung von Bauteilen gegenüber separaten Frequenzumrichtern führt. Dies gilt ebenso für die Bereitstellung der weiteren Gleichspannung zum Anschluss jeweiliger Wicklungsenden weiterer Motoren. Zusammenfassend kann die Bereitstellung der ersten Gleichspannung, der weiteren Gleichspannung und des Bezugspotentials als DC-Bus bezeichnet werden, da an diesen Bus mehrere Wechselrichter unabhängig voneinander betrieben werden können.

In einer insgesamt zweckmäßigen Ausführung ist die Wandlereinrichtung dazu eingerichtet, die weitere Gleichspannung auf dem Wert etwa der halben Gleichspannung einzustellen bzw. bereitzustellen. Damit können symmetrisch aufgebaute, zweiphasige Synchronmotoren betrieben werden.

Die Wandlereinrichtung umfasst einen elektronischen Schalter mit einem vordefinierten, kontinuierlichen, durch Pulsweitenmodulation bereitgestellten Tastgrad von zumindest etwa 0,5, zur Bereitstellung der weiteren Gleichspannung. In Kombination mit einem Gleichrichter, beispielsweise Dioden-Brückengleichrichter, kann auf einfache Weise eine zuverlässige Funktion bereitgestellt werden.

Der Frequenzumrichter umfasst einen weiteren, separaten Wechselrichter mit gesteuerten Halbbrücken zum Ein- und Ausschalten der Stromzufuhr für zumindest eine Wicklung eines weiteren, dreiphasigen Synchronmotors oder Asynchronmotors. Für diesen Motor ist kein Anschluss an die weitere Gleichspannung vorgesehen, sodass für diesen Motor für jede Phase die maximal mögliche Spannung aus der ersten Gleichspannung gegenüber dem Bezugspotential zur Verfügung steht. Mit diesem Wechselrichter wird vorzugsweise die Bestromung für einen Antriebsmotor einer Trommel in einer Waschmaschine oder einem Trockner bereitgestellt.

Insgesamt ist der Umrichter derart dimensioniert, dass bei einer Netznennspannung von 230V Wechselspannung eine erste Gleichspannung im Bereich von 230 V bis 400 V und eine weitere Gleichspannung im Bereich 115 V bis 200 V gegenüber dem Bezugspotential von 0V bereitgestellt wird.

Die Erfindung betrifft ein mechatronisches System, umfassend einen Umrichter in wenigstens einer der vorstehend beschriebenen Ausführungen, und zumindest zwei zweiphasige Motoren, die zu ihrem Betrieb an dem Umrichter angeschlossen sind, wobei zumindest zwei Wicklungen mit jeweils einem Wicklungsende zu einem Sternpunkt zusammengeschaltet und an der weiteren Ausgangsspannung angeschlossen sind. Hierbei ist es möglich, die Bauteile des Frequenzumrichters sehr eng an die Eigenschaften des zu bestromenden Motors anzupassen bzw. entsprechend zu dimensionieren, sodass ein sehr effizientes und im Aufbau kostenoptimiertes System geschaffen wird.

Das System umfasst einen weiteren 3- oder mehrphasigen Motor, beispielsweise einen Synchronmotor oder Asynchronmotor, der zur Ansteuerung bzw. zum Betrieb an den 3-phasigen Wechselrichter angeschlossen ist. Der dreiphasige Motor ist hierbei ausschließlich an die Ausgänge des Wechselrichters angeschlossen, mit nicht verbundenen bzw. nicht angeschlossenem/n Sternpunkt/en. Die zweiphasigen Motoren, die vorzugsweise für eine kleinere Leistung oder Phasenspannung ausgelegt sind, sind mit ihren Sternpunkten an den Mittelausgang für die weitere Gleichspannung angeschlossen. Somit wird mit einem einzigen, kompakten Frequenzumrichter eine Mehrzahl von unterschiedlichen Motoren, vorzugsweise Synchronmotoren mit Permanentmagnet bestückten Rotoren, für den Betrieb bestromt, sodass sich ein sehr übersichtlich gestaltetes System ergibt.

Die Erfindung betrifft ferner ein elektrisches Gerät, wie beispielsweise Waschmaschine, Trockner, Geschirrspüler, Kühlschrank, Dunstabzugshaube oder Gargerät, umfassend eine Geräte-Steuereinrichtung und ein mechatronisches System wenigstens einer Ausführung wie vorstehend beschrieben zum Antrieb einer Funktionsbaugruppe zum Betreiben des elektrischen Gerätes, wobei die Geräte-Steuereinrichtung mit der Steuereinrichtung des Frequenzumrichters in Wirkverbindung steht, um die Abläufe bzw. die programmgesteuerten Gerätefunktionen, die die Antriebe betreffen, einsprechend zu parametrieren oder zu bestimmen. Die Steuereinrichtung des Frequenzumrichters steuert dann anhand dieser Vorgaben die Schalter der Halbbrücken an, wodurch eine Pulsweitenmodulation zur Erzeugung der entsprechenden Frequenzen für die Phasenausgänge bereitgestellt wird. Bei einer Waschmaschine sind die 2-phasigen Motoren für Pumpen, Ablaufpumpe oder Umflutpumpe vorgesehen, wobei der dreiphasige Motor für den Drehantrieb der drehbar gelagerten Trommel vorgesehen ist.

Ein Ausführungsbeispiel der Erfindung ist in den Zeichnungen rein schematisch dargestellt und wird nachfolgend näher beschrieben. Es zeigen
- Fig. 1: ein elektrisches Gerät mit mehreren Motoren und einem Frequenzumrichter und
- Fig. 2, 3: den Frequenzumrichter und ein mechatronisches System in einer schematischen Darstellung.

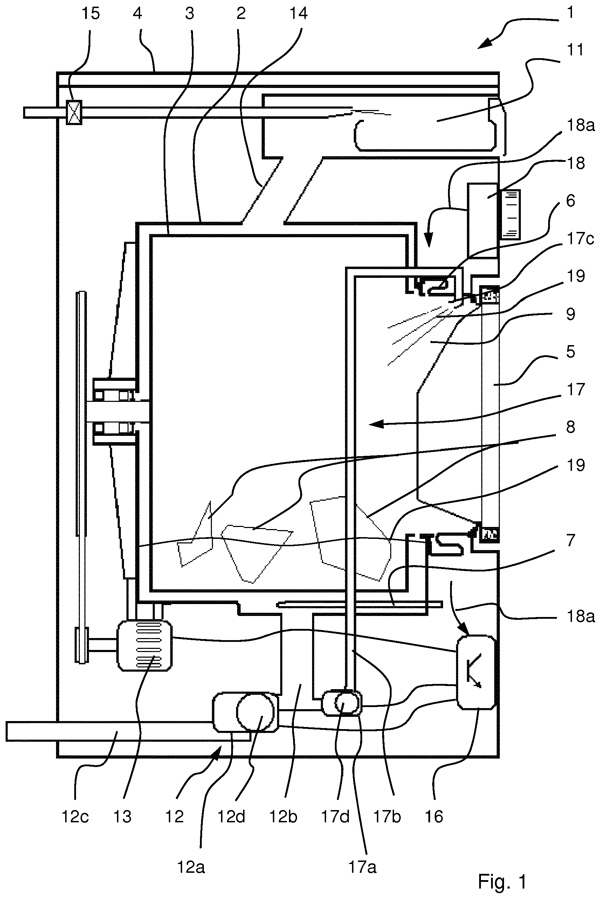

In Fig. 1 ist in rein schematischer Darstellung eine Waschmaschine 1 mit einem als Laugenbehälter 2 ausgebildeten Behandlungsbehälter dargestellt. Die Positions- und Richtungsangaben beziehen sich auf die betriebsgemäße Aufstellposition der Waschmaschine 1. Innerhalb des Laugenbehälters 2 ist eine drehbar gelagerte und über einen elektrischen Motor 13 angetriebene Trommel 3 angeordnet, die die im Laugenbehälter 2 befindlichen Wäschestücke 8 bewegt. Die Trommel 3 ist im vorliegenden Ausführungsbeispiel aus Edelstahl hergestellt und mit einer Vielzahl an Öffnungen für die Durchflutung versehen. Das Gehäuse 4 hat eine Beladungsöffnung 9, über die das Innere der Trommel 3 durch die Dichtungsmanschette 6 hindurch erreichbar ist. Die Beladungsöffnung 9 ist mittels einer Tür 5 verschließbar. Im unteren Bereich des Laugenbehälters 2 ist ein Heizkörper 7 angeordnet, der die Waschflüssigkeit im Laugenbehälter erhitzen kann. Im oberen Bereich der Maschine 1 ist ein Einlassventil 15 skizziert, welches das Einlaufen des Wassers aus dem Versorgungsnetz bereitstellt. Über den Einspülkasten 11 wird das Wasser über das Verbindungsrohr 14 in den Laugenbehälter 2 geleitet, wobei im Einspülkasten 11 eingegebenes Waschmittel mit in den Laugenbehälter 2 gespült wird. Unterhalb des Laugenbehälters 2 ist eine Ablaufeinrichtung 12 angeordnet, die die verbrauchte Waschflüssigkeit oder das Spülwasser aus dem Laugenbehälter 2 zur Ablaufleitung 12c herausführt, die in der Regel in einen Abwasserkanal mündet. Die Geräte-Steuereinrichtung 18 steuert das Einlassventil 15, die Aktivität der Ablaufeinrichtung 12 den Antriebsmotor 13, der über das Leistungsteil oder einen Frequenzumrichter 16 bestromt wird, und den Heizkörper 7. Im unteren Bereich des Laugenbehälters 2, bezogen auf die betriebsgemäße Aufstellposition der Waschmaschine 1, ist die Pumpe 17a in einer Umfluteinrichtung angebracht. Die Pumpe 17a ist auf der Eingangsseite bzw. Saugseite mit dem Ablaufrohr 12b verbunden und kann die darin befindliche Waschflüssigkeit 19 durch die Leitung 17b in den oberen Bereich des Laugenbehälters 2 bzw. der Trommel 3 fördern. Durch die Düse bzw. den Auslass 17c spritzt bzw. fließt die Waschflüssigkeit 19 auf die Wäschestücke 8.

In Fig. 1 ist ferner schematisch dargestellt, dass die Pumpen 12a und 17a jeweils einen elektrischen Motor 12d, 17d umfassen, der zum Antrieb der Pumpen 12a, 17a dient. In diesem Beispiel wird sowohl der Motor 12d der Ablaufpumpe als auch der Motor 17d der Umflutpumpe 17a vom Frequenzumrichter 16 bestromt. Der Frequenzumrichter 16 steht mit der Geräte-Steuereinrichtung 18 in Wirkverbindung, sodass die Geräte-Steuereinrichtung 18 über eine Signalverbindung 18a dem Frequenzumrichter 16 die Vorgaben übermittelt, wann die jeweiligen Pumpenmotoren 12d, 17d aktiviert werden sollen und wann der Betrieb mit der erhöhten Leistungszuführung erfolgen soll.

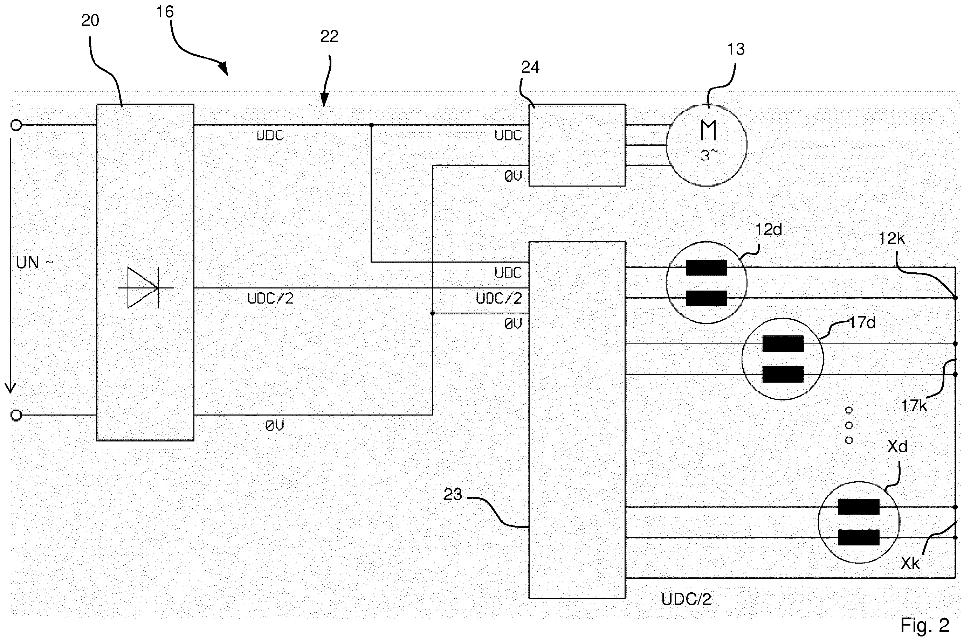

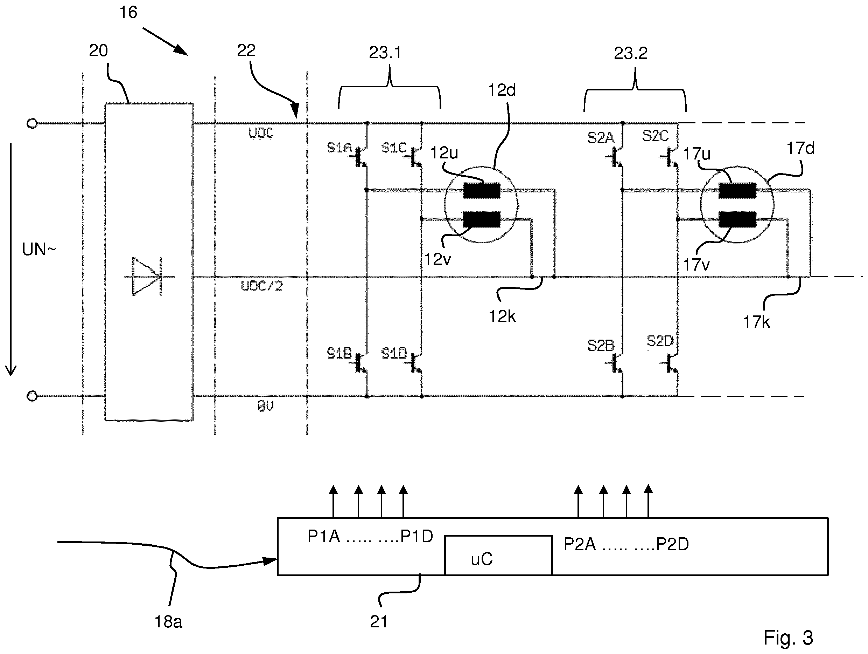

Fig. 2 zeigt eine Ausführung des Umrichters 16, der eine Wandlereinrichtung 20 umfasst, die aus der Eingangswechselspannung eine erste Gleichspannung UDC, eine weitere Gleichspannung UDC/2 und ein Bezugspotential 0V bereitstellt. Der Wechselrichter 24 umfasst 3 Halbbrücken, umfassend jeweils zwei elektronische Schalter, wie Bipolar-Transistoren, kombinierte Feldeffekttransistoren oder IGBTs, der zur Bestromung des 3-phasigen Motors 13 bestimmt ist. Die Bestromung erfolgt mittels dreiphasigen Wechselstromes, mit dem im Motor das für die Rotation des Rotors notwendige Drehfeld erzeugen kann. Die Halbbrücken werden nur aus der ersten Gleichspannung UDC und dem Bezugspotential 0V des Zwischenkreises 22 gespeist. Eine weitere Wechselrichteranordnung 23, die auch in Fig. 3 näher gezeigt ist, umfasst für die Bestromung von weiteren, 2-phasigen Synchronmotoren 12d, 17d, Xd jeweils einen unabhängig zu betreibenden Wechselrichter 23.1, 23.2 (Fig. 3). Die Wicklungen 12u und 12v des ersten Motors 12d sind mit ihrem ersten Ende jeweils mit einer Halbbrücke des ersten Wechselrichters 23.1 verbunden. Die jeweils zweiten Enden der beiden Wicklungen 12u, 12v sind zu einem Sternpunkt 12k miteinander verbunden. Der Sternpunkt 12k wiederum ist mit an der sogenannten mittleren oder weiteren Gleichspannung UDC/2 angeschlossen. Entsprechend ist der weitere Motor 17d mit seinen Wicklungen 17u, 17v an dem für ihn bestimmten Wechselrichter 23.2 angeschlossen. Entsprechendes gilt auch für einen weiteren Motor Xd, je nach Funktionsweise des elektrischen Gerätes 1. Als Sternpunkt 12k, 17k, Xk ist bei einem zweiphasigen Motor 12d, 17d, Xd) die Verbindungsstelle zwischen den Wicklungsenden von zumindest zwei Wicklungen 12u, 12v definiert.

Die Fig. 3 zeigt den erfindungsgemäßen Umrichter 16 mit Wandlereinrichtung 20 und den im Zwischenkreis 22 angeschlossenen Halbbrücken S1A, S1B, S1C, S1D des ersten Wechselrichters 23.1 zur Bestromung der Wicklungen 12u, 12v des ersten Motors 12d. In dem gezeigten Beispiel ist ein weiterer Wechselrichter S2A, S2B, S2C, S2D in der gleichen Art und Weise mit der ersten Gleichspannung UDC und dem Bezugspotential 0V verschaltet, um die Bestromung für den weiteren Motor 17d bereitzustellen. Weitere Wechselrichter zur Bestromung weiterer Motoren Xd können in der gleichen Art und Weise im besagten Zwischenkreis 22 hinzugefügt werden, je nach Anforderung an die Funktion. Die Steuereinrichtung 21, die einen Mikrocontroller mit Speicher umfasst, erhält ihre Befehle und Parameter mittels der Datenverbindung 18a von der Geräte-Steuereinrichtung 18 (Fig. 1). Anhand der empfangenen Vorgaben werden die Ports P1A bis P1D für den ersten Wechselrichter 23.1 und die Ports P2A bis P2D für den weiteren Wechselrichter 23.2 der Steuereinrichtung 21 bzw. des Mikrocontrollers uC gesteuert, die wiederum mit den elektronischen Schalten S1A, S1B, S1C, S1D zur deren Aktivierung und Deaktivierung verbunden sind, um mittels einer Pulsweitenmodulation eine Bestromung in Form von Wechselströmen mit vorgegebenen Frequenzen der jeweils angeschlossenen Wicklung 12u, 12v zu bewirken.

Einige Vorteile der neuen Lösung lassen sich wie folgt zusammenfassen:
Von jedem 2-Phasen-Motor ist jeweils ein Wicklungsende mit dem Potential UDC/2 vom DC-Bus (U DC, OV) des Spannungszwischenkreises verbunden. Die anderen beiden Wicklungsenden (Motorphasen) jedes 2-Phasen-Motors werden jeweils an eigene Halbbrücken, je bestehend aus zwei Leistungsschaltern S1A, S1B, S1C, S1D (Schalterpaar), angeschlossen. Das dem Frequenzumrichter zugeordnete Netzteil bzw. Wandlereinrichtung stellt an seinem Ausgang den DC-Bus zur Verfügung. Dieser umfasst zumindest die drei Potentiale UDC, UDC/2 und 0V. Die Bereitstellung von UDC/2 kann z.B. durch Modulation eines Schalterpaares (Halbbrücke) mit einem fixen Tastgrad in etwa von 0,5 erfolgen.

Der Wechselrichter 23 umfasst somit in der vorteilhaften Lösung für den Betrieb von (m2) 2-Phasen-Motoren nur eine Anzahl s = 4 · m2 Leistungsschaltern. Für den Betrieb von z.B. nur einem 2-Phasen-Motoren sind es also nur 4 Leistungsschalter. Für den Betrieb von z.B. zwei 2-Phasen-Motoren ergeben sich 8 Leistungsschalter.

Je mehr Motoren in einem Frequenzumrichter betrieben werden, desto größer ist das "Einsparpotential" an Leistungshalbleitern und Treibern bezogen auf die "klassischen" einzeln ausgebildeten Frequenzumrichter.

Ebenfalls reduziert sich damit die Peripherie zur Ansteuerung dieser Halbleiter.

Für den Betrieb von z.B. zwei 2-Phasen-Motoren lässt sich so ein "marktüblicher" Mikrocontroller mit z.B. vier unabhängigen PWM-Ausgängen (PWM-Puls-Weiten-Modulation) verwenden.

Entsprechende Halbbrücken-Treiber können ebenfalls eingespart werden.

Im Vergleich zu vorbekannten Wechselrichtern mit Modulation aller drei Ausgangsphasen, wie es in der EP 1 691 476 B1 vorgeschlagen ist, reduziert sich bei der genannten Schaltungstopologie, aufgrund des festen Potentials UDC/2 auf dem DC-Bus, die maximal mögliche Spannung an einem Wicklungsstrang des Motors. Daher ist die erfindungsgemäße Schaltung des Umrichters besonders vorteilhaft anzuwenden bei Motoren kleiner und mittlerer Leistung (z.B. Gebläsen oder kleinen Pumpen), bei denen die Ausnutzung der maximal möglichen Wechselrichter-Ausgangsspannung (verkettete Spannungen) nicht erforderlich ist. Beim Anschluss von zwei oder mehr 2-Phasen-Motoren ergeben sich folgende Vorteile:
- Beliebiges Ein- und Ausschalten eines, mehrerer oder aller Motoren gleichzeitig und/oder sequentiell ist möglich.
- Geregelter Betrieb mit unterschiedlichen Drehzahlen (unterschiedlichen elektrischen Drehfrequenzen) der einzelnen Motoren möglich.
- Sensierung der Lastzustände jedes einzelnen Antriebs (zur weiteren Auswertung, z.B. "Schlürf-Erkennung" oder Blockierung oder Defekt, wie Unterbrechung oder Kurzschluss einer Wicklung eines Pumpenantriebs) ist möglich.
- Zusätzliche elektromechanische Bauteile, wie Relais, für eine Umschaltung der Phasenausgänge des Umrichters auf verschiedene Motoren kann entfallen.

## Patentansprüche

1. Mechatronisches System, umfassend:
- einen Umrichter (16), der eine Wandlereinrichtung (20) umfasst, die aus einer Eingangswechselspannung (UN) eine Gleichspannung (UDC) und ein Bezugspotential (0V) bereitstellt, wobei die Wandlereinrichtung (20) einen elektronischen Schalter mit einem vordefinierten, kontinuierlichen, durch Pulsweitenmodulation bereitgestellten Tastgrad von zumindest etwa 0,5 umfasst, um in Kombination mit einem Gleichrichter eine weitere Gleichspannung (UDC/2) bereitzustellen, die im Bereich zwischen der Gleichspannung (UDC) und dem Bezugspotential (0V) liegt;
- einen 3-phasigen Motor (13) und einen Wechselrichter (24), der drei Halbbrücken zur Bestromung des 3-phasigen Motors (13) umfasst, wobei die Halbbrücken nur aus der ersten Gleichspannung (UDC) und dem Bezugspotential (0V) gespeist werden; und
- mindestens zwei 2-phasige Synchronmotoren (12d, 17d) und jeweils einen Wechselrichter (23.1, 23.2) mit zwei Halbbrücken, wobei die Wicklungen (12u, 12v, 17u, 17v) jedes Motors (12d, 17d) mit ihrem ersten Ende mit einer entsprechenden Halbbrücke des zugehörigen Wechselrichters (23.1, 23.2) verbunden sind und die zweiten Enden der Wicklungen (12u, 12v, 17u, 17v) zu einem Sternpunkt (12k) zusammengeschaltet sind, der an der weiteren Gleichspannung (UDC/2) angeschlossen ist.

2. Mechatronisches System nach Anspruch 1, wobei die weitere Gleichspannung (UDC/2) etwa den Wert der halben Gleichspannung (UDC) aufweist.

3. Mechatronisches System nach Anspruch 1 oder 2, wobei der Gleichrichter ein Dioden-Brückengleichrichter ist.

4. Mechatronisches System nach einem der vorhergehenden Ansprüche, die mindestens zwei 2-phasigen Synchronmotoren (12d, 17d) Motoren mit Permanentmagnet-bestückten Rotoren sind.

5. Mechatronisches System nach einem der vorhergehenden Ansprüche, wobei der 3-phasige Motor (13) als Synchronmotor oder Asynchronmotor ausgebildet ist.

6. Elektrisches Gerät (1), wie Waschmaschine, Trockner, Geschirrspüler, Kühlschrank, Dunstabzugshaube oder Gargerät, umfassend eine Geräte-Steuereinrichtung (18) und ein mechatronisches System gemäß einem der Ansprüche 1 bis 5 zum Antrieb einer Funktionsbaugruppe (3, 12a, 17a) zum Betreiben des elektrischen Gerätes (1), wobei die Geräte-Steuereinrichtung (18) mit der Steuereinrichtung (21) des Umrichters (16) in Wirkverbindung steht.

## Claims

1. Mechatronic system, comprising:
- a converter (16), comprising a converter device (20) that provides a direct voltage (UDC) and a reference potential (0V) from an AC input voltage (UN), the converter device (20) comprising an electronic switch having a predefined, continuous duty cycle, provided by pulse width modulation, of at least approximately 0.5, in order to provide, in a combination with a rectifier, an additional direct voltage (UDC/2) which is located in the range between the direct voltage (UDC) and the reference potential (0V);
- a 3-phase motor (13) and an inverter (24) that comprises three half bridges for energising the 3-phase motor (13), the half bridges being fed only from the first direct voltage (UDC) and the reference potential (0V); and
- at least two 2-phase synchronous motors (12d, 17d) and in each case an inverter (23.1, 23.2) having two half bridges, the first ends of the coils (12u, 12v, 17u, 17v) of each motor (12d, 17d) being connected to a corresponding half bridge of the associated inverter (23.1, 23.2) and the second ends of the coils (12u, 12v, 17u, 17v) being interconnected to form a neutral point (12k) that is connected to the additional direct voltage (UDC/2).

2. Mechatronic system according to claim 1, wherein the additional direct voltage (UDC/2) is approximately the value of half the direct voltage (UDC).

3. Mechatronic system according to either claim 1 or claim 2, wherein the rectifier is a full-wave diode bridge rectifier.

4. Mechatronic system according to any of the preceding claims, the at least two 2-phase synchronous motors (12d, 17d) are motors having rotors that are equipped with permanent magnets.

5. Mechatronic system according to any of the preceding claims, wherein the 3-phase motor (13) is formed as a synchronous motor or an asynchronous motor.

6. Electric device (1), such as a washing machine, drier, dishwasher, refrigerator, extractor hood or cooking appliance, comprising an appliance control device (18) and a mechatronic system according to any of claims 1 to 5 for driving a functional unit (3, 12a, 17a) for operating the electric device (1), wherein the appliance control device (18) is operatively connected to the control device (21) of the convertor (16).

## Revendications

1. Système mécatronique, comprenant :
- un convertisseur (16), lequel comprend un mécanisme de transduction (20) qui fournit une tension continue (UDC) et un potentiel de référence (0V) à partir d'une tension alternative d'entrée (UN) ;
dans lequel le mécanisme de transduction (20) comprend un commutateur électronique avec un rapport cyclique prédéfini et continu de tout au moins environ 0,5, lequel est mis à disposition par une modulation de largeur d'impulsion, en vue de fournir, en combinaison avec un redresseur, une autre tension continue (UDC/2) qui se situe dans la zone comprise entre la tension continue (UDC) et le potentiel de référence (0V) ;
- un moteur triphasé (13) et un onduleur (24), lequel comprend trois demi-ponts en vue de l'alimentation en courant du moteur triphasé (13) ;
dans lequel les demi-ponts ne sont alimentés qu'à partir de la première tension continue (UDC) et du potentiel de référence (0V) ; et
- au moins deux moteurs synchrones biphasés (12d, 17d) et respectivement un onduleur (23.1, 23.2) avec deux demi-ponts ;
dans lequel les bobinages (12u, 12v, 17u, 17v) de chaque moteur (12d, 17d) sont reliés avec un demi-pont correspondant de l'onduleur (23.1, 23.2) qui lui est associé, au moyen de leur première extrémité, et les deuxièmes extrémités des bobinages (12u, 12v, 17u, 17v) sont interconnectées en un point en étoile (12k), lequel est raccordé à l'autre tension continue (UDC/2).

2. Système mécatronique selon la revendication 1, dans lequel l'autre tension continue (UDC/2) présente approximativement la valeur de la moitié de la tension continue (UDC).

3. Système mécatronique selon la revendication 1 ou 2, dans lequel le redresseur est un pont redresseur à diodes.

4. Système mécatronique selon l'une des revendications précédentes, les au moins deux moteurs synchrones biphasés (12d, 17d) sont des moteurs avec des rotors équipés d'aimants permanents.

5. Système mécatronique selon l'une des revendications précédentes, dans lequel le moteur triphasé (13) est conçu sous la forme d'un moteur synchrone ou d'un moteur asynchrone.

6. Appareil électrique (1), tel qu'une machine à laver, un sèche-linge, un lave-vaisselle, un réfrigérateur, une hotte d'aspiration ou un appareil de cuisson, comprenant un mécanisme de commande pour appareils (18) et un système mécatronique conformément à l'une des revendications 1 à 5 en vue de l'entraînement d'un module fonctionnel (3, 12a, 17a) destiné au fonctionnement de l'appareil électrique (1), dans lequel le mécanisme de commande pour appareils (18) se trouve en liaison active avec le mécanisme de commande (21) du convertisseur (16).
